# EUROPEAN PATENT APPLICATION

(11) **EP 1 638 299 A1**
(43) Date of publication of application: **22.03.2006**
(21) Application number: 05077053.6
(22) Date of filing: 08.09.2005
(51) Int. Cl.: H04M 1/02

(54) **Hand-held communication device with two housings and a keypad accessible both in the open and the closed position**

(30) Priority: 17.09.2004 US 944073
(71) Applicant: Siemens Communications, Inc., Boca Raton FL 33431-4491 (US)
(72) Inventor: Chadha, Lovleen, Faridabad Haryana (IN)
(74) Representative: Neill, Andrew Peter

(57) **Abstract**

A hand-held communication device comprises a housing including a lower housing portion (112) and an upper housing portion (124). The upper housing portion is pivotally or slidably coupled to the lower housing portion for allowing the hand-held communication device to be compressed or closed into a more compact shape by pivoting or sliding the upper housing portion into a closed position against the lower housing portion. A numeric keypad assembly is positioned in the lower housing portion so that the keys of the numeric keypad assembly are accessible while the upper housing portion is in the closed position (114,112).

## Description

### BACKGROUND OF THE INVENTION

The present invention relates generally to hand-held communication devices such as mobile telephones, palmtop computers, personal digital assistants, or the like, having a lower housing portion and an upper housing portion pivotally or slidably coupled to the lower housing portion for allowing the hand-held communication device to be compressed or closed into a more compact shape by pivoting or sliding the upper housing portion into a closed position against the lower housing portion, and more particularly, to a hand-held communication device including a numeric keypad assembly which is accessible when an upper housing portion is in a closed position.

Hand-held communication devices, particularly mobile telephones, personal digital assistants, or the like, comprise a class of portable electronic devices, whose size enables them to be held in one hand while being operated with the other. Typical hand-held communication devices include a display, which may include a digitizer or touch sensitive overlay for allowing a user to enter information and commands using a stylus or pen, and a numeric keypad for allowing a user to input numeric digits to the communication device, such as for inputting a telephone number. Such hand-held communication devices may also include an alphabetic keypad, such as a QWERTY keypad, or the like, for entering alphanumeric text, common commands, selecting menus to be displayed by the display, or the like.

Many hand-held communication devices include an upper housing portion, which typically includes the display, and a lower housing portion, which typically includes the keypad. The upper housing portion is pivotally or slidably coupled to the lower housing portion for allowing the hand-held communication device to be compressed or closed into a more compact shape by pivoting or sliding the upper housing portion into a closed position against the lower housing portion. In such instances, the keypad disposed on the lower housing portion is obscured beneath the upper housing portion when the upper housing portion is in the closed position. Moreover, due to the positioning of the display in the upper housing portion, it is normally impossible to also place the keypad in the upper housing portion, forcing the keypad to be positioned in the lower housing portion.

Consequently, the keypad cannot be used for common input tasks, such as for inputting a telephone number, selecting menu items, or the like, when the hand-held communication device is closed. Instead, the user is required to open the hand-held communication device by pivoting or sliding the upper housing portion to an opened position in order access the numeric keypad. Thus, it would be advantageous to eliminate the need for opening a hand-held communication device for inputting numerical data by providing a numeric keypad assembly that is accessible while the upper housing portion is in the closed position.

### SUMMARY OF THE INVENTION

The present invention is directed to a hand-held communication device having a housing including a lower housing portion and an upper housing portion. The upper housing portion is pivotally or slidably coupled to the lower housing portion for allowing the hand-held communication device to be compressed or closed into a more compact shape by pivoting or sliding the upper housing portion into a closed position against the lower housing portion. A numeric keypad assembly is positioned in the lower housing portion so that the keys of the numeric keypad assembly are accessible while the upper housing portion is in the closed position.

It is to be understood that both the foregoing general description and the following detailed description are exemplary and explanatory only and are not necessarily restrictive of the invention claimed. The accompanying drawings, which are incorporated in and constitute a part of the specification, illustrate embodiments of the invention and together with the general description, serve to explain the principles of the invention.

### BRIEF DESCRIPTION OF THE DRAWINGS

FIG. 1 is a top plan view illustrating a hand-held communication device having a numeric keypad in accordance with an exemplary embodiment of the present invention;
FIG. 2 is a side elevation view of the hand-held communication device illustrated in FIG. 1;
FIG. 3 is a top plan view of the hand-held communication device illustrated in FIG. 1, wherein the hand-held communication device is opened;
FIG. 4 is an end elevation view of the hand-held communication device illustrated in FIG. 3;
FIG. 5 is a top plan view illustrating a hand-held communication device having a numeric keypad in accordance with a second exemplary embodiment of the present invention;
FIG. 6 is a top plan view of the hand-held communication device illustrated in FIG. 5, wherein the hand-held communication device is opened;
FIG. 7 is a top plan view illustrating a hand-held communication device having a numeric keypad in accordance with a third exemplary embodiment of the present invention;
FIG. 8 is a top plan view of the hand-held communication device illustrated in FIG. 7, wherein the hand-held communication device is opened;
FIG. 9 is an end elevation view of the hand-held communication device illustrated in FIG. 8;
FIG. 10 is a top plan view illustrating a hand-held communication device having an accessible numeric keypad in accordance with a fourth exemplary embodiment of the present invention;
FIG. 11 is a top plan view of the hand-held communication device illustrated in FIG. 10, wherein the hand-held communication device is partially opened; and
FIG. 12 is a top plan view of the hand-held communication device illustrated in FIG. 10, wherein the hand-held communication device is fully opened.

### DETAILED DESCRIPTION OF SPECIFIC EMBODIMENTS

Reference will now be made in detail to the presently preferred embodiments of the invention, examples of which are illustrated in the accompanying drawings.

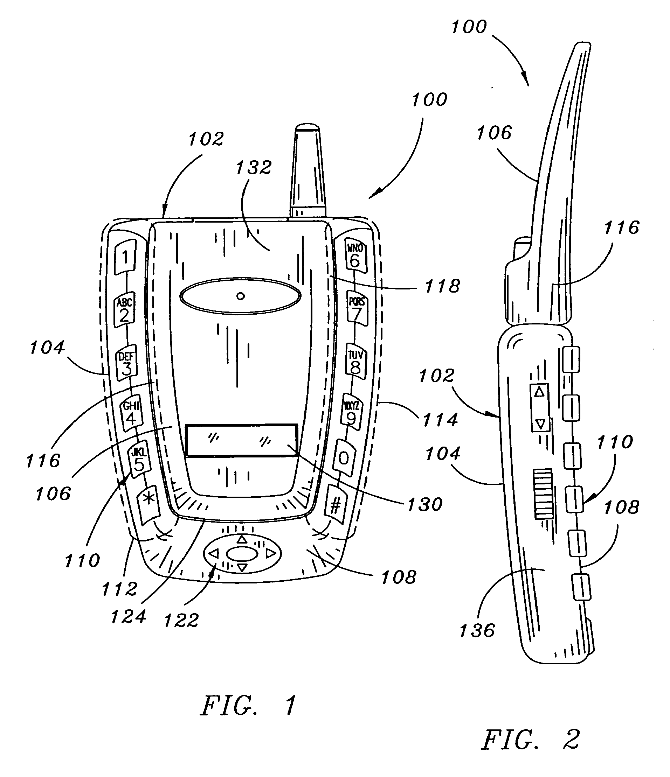

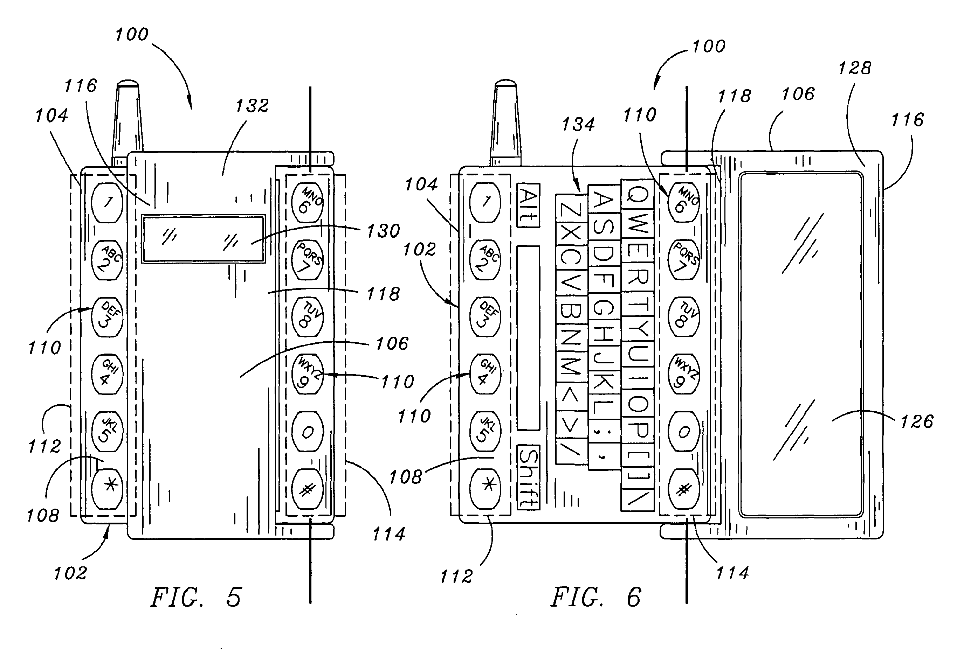

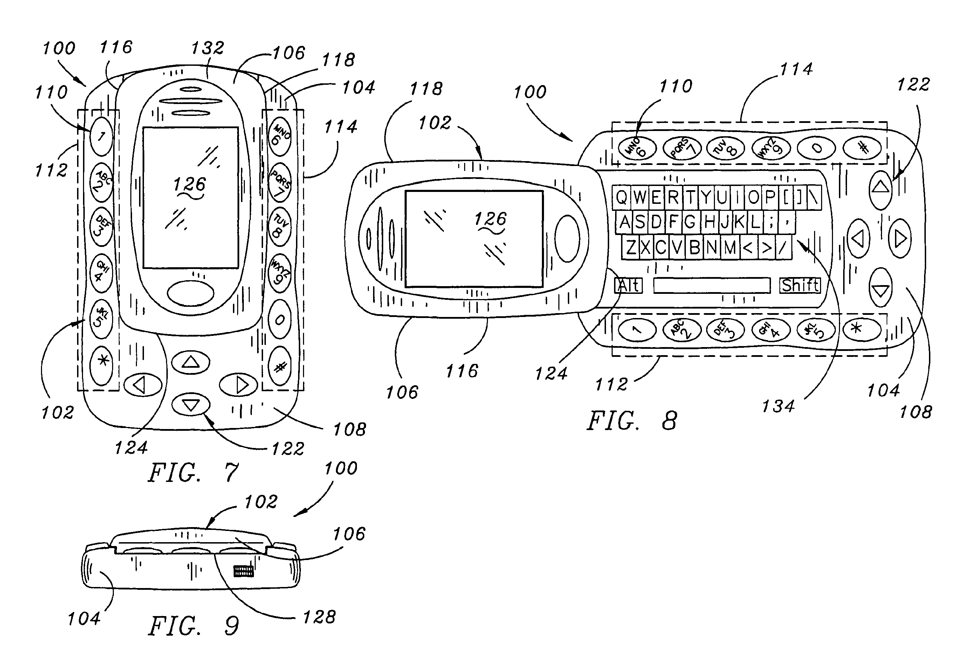

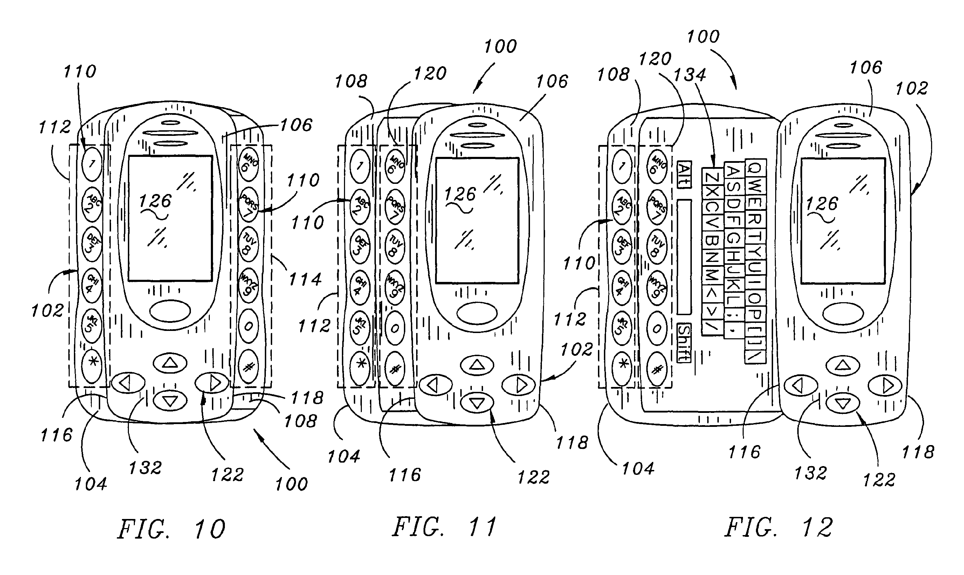

FIGS. 1 through 11 illustrate hand-held communication devices 100 in accordance with exemplary embodiments of the present invention. Each hand-held communication device 100 includes a housing 102 having a lower housing portion 104 and an upper housing portion 106. Preferably, the housing 102 is sized to be held within the hand of a user. The upper housing portion 106 is coupled to the lower housing portion 104 for allowing the hand-held communication device 100 to be compressed or closed into a more compact shape by moving the upper housing portion 106 between an opened position, providing access to an upper face 108 of the lower housing portion 104 and a closed position wherein the upper housing portion rests against or adjacent to an upper face 108 of the lower housing portion 104. For example, in the embodiment illustrated in FIGS. 1 through 6, the hand-held communication device 100 is embodied as a folding mobile telephone or "flip-phone" having a clam-shell housing 102. In these embodiments, the upper housing portion 106 folds or pivots between the opened position, shown in FIGS. 2, 3 and 6, wherein the upper housing portion 106 extends away from the lower housing portion 104 exposing the upper face 108 of the lower housing portion 104, and the closed position, shown in FIGS. 1, 4 and 5, wherein the upper housing portion 106 is folded against the lower housing portion 104, either about a generally horizontal axis with respect to the lower housing portion 104, as shown in FIGS. 1 through 4, or about a generally vertical axis with respect to the lower housing portion 104, as shown in FIGS. 5 and 6. Similarly, in the embodiments illustrated in FIGS. 7 through 12, the hand-held communication device 100 is embodied as a sliding mobile telephone or "slider-phone." In these embodiments, the upper housing portion 106 slides between the opened position, shown in FIGS. 8 and 12, and the closed position, shown in FIGS. 7, 9 and 10, either along a generally vertical axis with respect to the lower housing portion 104, as shown in FIGS. 7 through 9, or along a generally horizontal axis with respect to the lower housing portion 104, as shown in FIGS. 10 through 11. In the embodiment shown in FIGS. 10 through 12, the upper housing portion may further slide to an intermediate position, shown in FIG. 11, between the open and closed positions.

In accordance with the present invention, a numeric keypad assembly 110 is disposed in the lower housing portion 104 so that the numeric keypad assembly 110 is accessible while the upper housing portion 106 is in the closed position. In this manner, users of the hand-held communication device 100 may access and press keys of the numeric keypad assembly 100 without moving the upper housing portion 106 to the opened position, allowing the user to perform many common input functions such as inputting a telephone number, inputting a personal identification (PIN) number for voice mail, or the like, with the upper housing portion 106 in the closed position. In exemplary embodiments, the numeric keypad assembly 110 comprises a first set of keys 112 and a second set of keys 114 disposed on the upper face 108 of the lower housing portion 104. While the upper housing portion 106 is in the closed position, the first set of keys 112, which includes keys arranged in one or more rows, is positioned on a first side 116 of the upper housing portion 106, while the second set of keys 114, which may likewise include keys arranged in one or more rows, is positioned on a second side 118 of the upper housing portion. In this manner, the numeric keypad assembly 110 is accessible while the upper housing portion 106 is in the closed position. It should be noted that moving the upper housing portion 106 between the closed and the opened position may partially obscure keys of the numeric keypad assembly 110. In such instances, a duplicate set of keys may be provided in place of the keys obscured by the upper housing portion 106 while the upper housing portion 106 is in a position obscuring the keys. For instance, in the embodiment shown in FIGS. 10, 11 and 12, the upper housing portion 106 may move between a closed position, shown in FIG. 10, an intermediate position, shown in FIG. 11, and a fully opened position shown in FIG. 12. While the upper housing portion 106 is in the intermediate position or fully opened position, the upper housing portion 106 covers the second set of keys 114 so that the second set of keys 114 is obscured to the user. Consequently, a duplicate second set of keys 120 may be provided adjacent to the first set of keys 112, so that the duplicate second set of keys 120 is accessible by the user for use when the upper housing portion 106 is in the intermediate position or the fully opened position, but is covered and thus obscured from use by the user while the upper housing portion is in the closed position.

While the presently described embodiments illustrate a numeric keypad assembly 110 including a first and second set of keys 112 and 114, those of skill in the art will appreciate that more or fewer sets of keys may be provided with the numeric keypad assembly 110 without departing from the scope and intent of the present invention. For example, the keypad assembly may include a single set of keys arranged on one side of the upper housing portion 106. Additionally, other keys, such as a third set of keys 122, may be provided on the upper face 108 of the lower housing portion 104. In the specific embodiment illustrated, the third set of keys 122 is disposed on the lower housing portion 104 on a third side 124 of the upper housing portion 106. Further, it will be appreciated that the numeric keypad assembly may include keys necessary for standard telephony, such as an asterisk key ('*'), an octothorpe key ('#'), or the like.

In the embodiments illustrated, the upper housing portion 106 includes a display 126 for displaying information to users of the hand-held communication device 100. In the "flip-phone" embodiments illustrated in FIGS. 1 through 6, the display 126 is disposed on the inner face 128 of the upper housing portion 106 so that the display 126 is held against or adjacent to the upper face 108 of the lower housing portion 104 while the upper housing portion is in the closed position. The hand-held communication device 100 may further include a second display 130 disposed on the outer face 132 of the upper housing portion 106, which may be smaller than the display 126 disposed on the inner face 128, for displaying simplified information (e.g., telephone numbers of incoming telephone calls, short text messages, or the like) to the user while the upper housing portion 106 is in the closed position and the display 126 disposed on the inner face 128 is inaccessible. Alternatively, in the "slider-phone" embodiments shown in FIGS. 7 through 12, the display 126 is disposed on the outer face 132 of the upper housing portion 106, the inner-face being normally inaccessible in both the open and closed positions. Thus, the display 126 is visible in both the open and closed positions. In specific embodiments, the display 126 may further include a digitizer or touch sensitive overlay for allowing a user to enter information and commands using a stylus, pen or fingertip. Preferably, the display 126 is visible when the upper housing portion 106 is in either of an open and a closed position.

The lower housing portion 104 includes a second keypad assembly 134 for entering alphanumeric text, common commands, selecting menus to be displayed by the display, or the like. The second keypad assembly 134 is comprised of a plurality of keys supported in the upper face 108 of the lower housing portion 104 for receiving input from a user and providing the input to the hand-held communication device 100. The second keypad assembly 134 is disposed against an inner face 128 of the upper housing portion 106 when the upper housing portion is placed in the closed position, and is accessible when the upper housing portion is placed in the opened position.

The second keypad assembly 134 may include alphabet keys, symbol keys, keys for entering common commands, keys for selecting menus to be displayed by the display, or the like. For instance, in the exemplary embodiments shown, the second keypad assembly 134 employs a conventional QWERTY keyboard key arrangement. However, it is contemplated that other key arrangements may be provided without departing from the scope and intent of the present invention. For example, the second keypad assembly 134 may alternatively employ a Dvorak keyboard key arrangement or an alphabetic key arrangement. Further, the keypad assembly may provide non-alphabetic keys such as function keys, keys for controlling gaming functions, keys for controlling Internet browser functions, keys for controlling recording and/or playback of media (e.g., music and video), a second numeric keypad, or the like, in addition to or in place of the alphabetic keys illustrated. Alternatively, instead of the second keypad assembly 134 illustrated, the upper face 108 of the lower housing portion 104 may be provided with a display having a digitizer or touch sensitive overlay for allowing a user to enter information and commands using a stylus, pen or fingertip; may provide some other type of input device (e.g., a mouse pad, a track-ball, or the like); or may provide no input device.

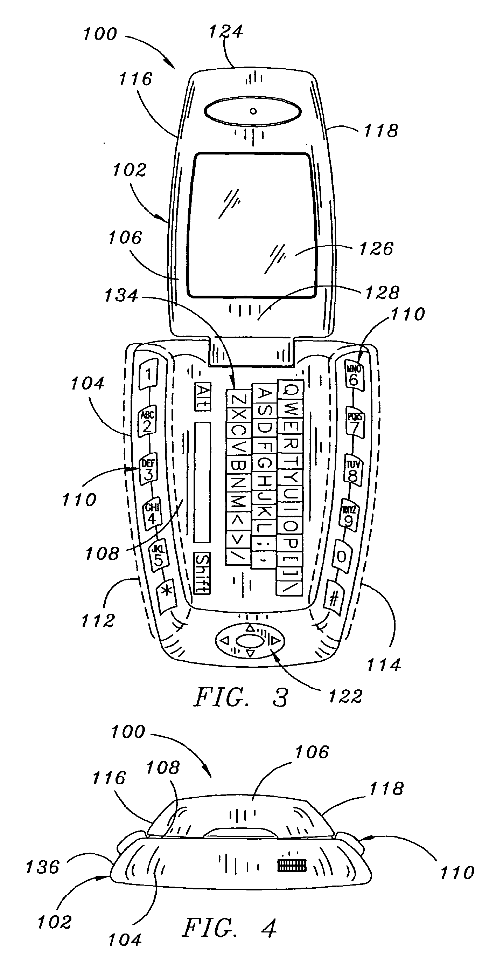

In exemplary embodiments of the present invention, the second keypad assembly 134 is positioned for use with the display 126. For this reason, it may be preferable to orient the hand-held communication device 100 differently for use in either of the open and closed positions. For instance, when utilizing the numeric keypad assembly 110 with the second display 130, it may be preferable to orient the hand-held communication device in a first or vertical orientation as shown in FIGS. 1, 5, 7 and 10. However, when utilizing the second keypad assembly 134 with the display 126, it may be preferable to orient the hand-held communication device 100 in a second or horizontal orientation as shown in FIGS. 3, 6, 8, 11 and 12. Thus, the numeric keypad assembly 110 and the second keypad assembly 134 may be oriented accordingly (e.g., perpendicularly to one another). Moreover, in specific embodiments, an angular orientation may be used for numerical digits marked on the keys of the numeric keypad assembly 110, such that the numerical digits are easily visible when seen from either of the first and second directions.

Buttons or keys may also be provided on a side face 136 of the lower housing portion 104 or on other faces of the lower housing portion 104 for controlling functions of the hand-held communication device 100. Those of skill in the art will appreciate that buttons or keys may likewise be placed upon a face of the upper housing portion 106 without departing from the scope and intent of the present invention.

The hand-held communication devices 100 may, in exemplary embodiments, comprise a mobile telephone, and may further include components for providing wireless communication of voice and/or data information with external sources such as a base station, a cellular communication system tower, a second hand-held communication device, or the like. For example, the hand-held communication device 100 may comprise internal components including a processing system, memory, a transceiver assembly including a transmitter and receiver or transceiver, an antenna, a data card reader for receiving a data card (e.g., a subscriber identification module (SIM) card or a user identification module (UIM) card), a speaker or earpiece assembly, a microphone, a power source such as a battery, or the like. Additionally, it is contemplated that the hand-held communication device 100 may provide functions other than telephony. For example, the hand-held communication device 100 may provide functions common to hand held computers or personal digital assistants, portable gaming devices, or the like. In such embodiments, the hand-held communication device 100 may further include a suitable processing system, extended memory, a touch screen overlaying display for tactile input of data, or the like.

In FIGS. 1 through 11, the hand-held communication devices 100 illustrated are generally shown in "brick" form with most ornate features eliminated. However, those of ordinary skill in the art will recognize that hand-held communication devices 100 in accordance with the present invention are not limited to the specific configurations disclosed herein, but instead may employ form factors having other ornamental or functional design features without departing from the scope and intent of the present invention. For example, in FIGS. 1 through 6, the hand-held communication device 100 is embodied as a folding mobile telephone or "flip-phone" having a clam-shell housing 102, while FIGS. 7 through 11 illustrate the hand-held communication device 100 embodied as a sliding mobile telephone or "slider-phone." However, it is contemplated that the present invention may be implemented in other types of hand-held communication devices 100, including, but not limited to, mobile telephones having forms other than those specifically illustrated, personal digital assistants, hand-held gaming devices, or the like.

It is believed that the present invention and many of its attendant advantages will be understood by the foregoing description, and it will be apparent that various changes may be made in the form, construction and arrangement of the components thereof without departing from the scope and spirit of the invention or without sacrificing all of its material advantages. The form herein before described being merely an explanatory embodiment thereof, it is the intention of the following claims to encompass and include such changes.

## Claims

1. A hand-held communication device, comprising:
a housing including a lower housing portion having an upper face and an upper housing portion coupled to the lower housing portion, the upper housing portion moving between an opened position for providing access to the upper face of the lower housing portion and a closed position for at least partially covering the upper face of the lower housing portion; and
a numeric keypad assembly disposed in the lower housing portion for receiving input of information;
wherein the numeric keypad assembly is accessible while the upper housing portion is in the closed position.

2. The hand-held communication device as claimed in claim 1, wherein the numeric keypad assembly comprises a first set of keys and a second set of keys, the first set of keys being disposed in the lower housing on a first side of the upper housing portion and the second set of keys being disposed in the lower housing on a second side of the upper housing while the upper housing is in the closed position.

3. The hand-held communication device as claimed in claim 2, wherein the numeric keypad assembly further comprises a third set of keys disposed in the lower housing on a third side of the upper housing portion.

4. The hand-held communication device as claimed in claim 2, wherein keys of each of the first set of keys and the second set of keys are arranged in rows adjacent to the upper housing portion.

5. The hand-held communication device as claimed in claim 1, wherein the upper housing portion pivots between the closed position and the opened position and comprises an inner face and an outer face, the inner face being generally disposed against the upper face of the lower housing portion when the upper housing portion is in the closed position.

6. The hand-held communication device as claimed in claim 5, wherein the upper housing comprises a display disposed on the inner face and the lower housing comprises a second keypad disposed on the upper face.

7. The hand-held communication device as claimed in claim 6, wherein the upper housing portion comprises a second display disposed on the outer face.

8. The hand-held communication device as claimed in claim 1, wherein the upper housing slides between the closed position and the opened position and comprises an outer face.

9. The hand-held communication device as claimed in claim 8, wherein the upper housing portion comprises a display disposed on the outer face and the lower housing comprises a second keypad disposed on the upper face

10. A hand-held communication device, comprising:
a housing including a lower housing portion having an upper face including a keypad for receiving input of information and an upper housing portion including a display for displaying information, the upper housing portion being coupled to the lower housing portion so that the upper housing portion pivots between an opened position for providing access to the keypad and a closed position for at least partially covering the keypad; and
a numeric keypad assembly disposed in the lower housing portion adjacent to the keypad for receiving input of information;
wherein the numeric keypad assembly is accessible while the upper housing portion is in the closed position.

11. The hand-held communication device as claimed in claim 10, wherein the numeric keypad assembly comprises a first set of keys and a second set of keys, the first set of keys being disposed in the lower housing on a first side of the upper housing portion and the second set of keys being disposed in the lower housing on a second side of the upper housing while the upper housing is in the closed position.

12. The hand-held communication device as claimed in claim 11, wherein the numeric keypad assembly further comprises a third set of keys disposed in the lower housing on a third side of the upper housing portion.

13. The hand-held communication device as claimed in claim 11, wherein keys of each of the first set of keys and the second set of keys are arranged in rows adjacent to the upper housing portion.

14. The hand-held communication device as claimed in claim 10, wherein the upper housing portion comprises an inner face and an outer face, the inner face being generally disposed against the upper face of the lower housing portion when the upper housing portion is in the closed position.

15. The hand-held communication device as claimed in claim 14, wherein the display disposed on the inner face.

16. The hand-held communication device as claimed in claim 15, wherein the upper housing portion comprises a second display disposed on the outer face.

17. A hand-held communication device, comprising:
a housing including a lower housing portion having an upper face having a keypad for receiving input of information and an upper housing portion including a display for displaying information, the upper housing portion being coupled to the lower housing portion so that the upper housing portion slides between an opened position for providing access to the keypad and a closed position for at least partially covering the keypad; and
a numeric keypad assembly disposed in the lower housing portion adjacent to the keypad for receiving input of information;
wherein the numeric keypad assembly is accessible while the upper housing portion is in the closed position.

18. The hand-held communication device as claimed in claim 17, wherein the numeric keypad assembly comprises a first set of keys and a second set of keys, the first set of keys being disposed in the lower housing on a first side of the upper housing portion and the second set of keys being disposed in the lower housing on a second side of the upper housing while the upper housing is in the closed position.

19. The hand-held communication device as claimed in claim 18, wherein the numeric keypad assembly further comprises a third set of keys disposed in the lower housing on a third side of the upper housing portion.

20. The hand-held communication device as claimed in claim 19, wherein keys of each of the first set of keys and the second set of keys are arranged in rows adjacent to the upper housing portion.
